# EUROPEAN PATENT SPECIFICATION

(11) **EP 1 033 418 B1**
(45) Date of publication and mention of the grant of the patent: **01.08.2012**
(21) Application number: 99919592.8
(22) Date of filing: 14.05.1999
(51) Int. Cl.: C23G 5/06, B60N 2/00, C10M 173/02, C09D 191/06, C09D 5/08

(54) **TREATING AGENT FOR PREVENTING GRATING NOISE FROM GENERATING BETWEEN URETHANE FOAM AND METAL SURFACE AND METHOD THEREFOR**
BEHANDLUNGSLÖSUNG ZUR VERHINDERUNG VON GITTERSTÖRUNGEN ZWISCHEN URETHANSCHAUM UND METALLOBERFLÄCHE UND VERFAHREN
AGENT DE TRAITEMENT POUR EMPECHER TOUT BRUIT DE RAPE ENTRE LA MOUSSE D'URETHANE ET LA SURFACE METALLIQUE ET PROCEDE POUR CE DERNIER

(30) Priority: 24.08.1998 JP 23748298
(43) Date of publication of application: 06.09.2000
(73) Proprietor: Namba Press Works Co., Ltd., Kurashiki-City Okayama Prefecture 711-0911 (JP)
(72) Inventor: SENOO, Yasumasa, Namba Press Works Co., Ltd., Kurashiki City, Okayama 711-0911 (JP); KOMATSUBARA, Takao, Namba Press Works Co., Ltd., Kurashiki City, Okayama 711-0911 (JP); GOTO, Fumio, Namba Press Works Co., Ltd., Kurashiki City, Okayama 711-0911 (JP)
(74) Representative: Dawson, Elizabeth Ann
(86) International application number: PCT/JP1999/002523
(87) International publication number: WO 2000/011241

(56) References cited:
- GB-A- 975 123
- JP-A- 3 062 896
- JP-A- 8 176 491
- DATABASE WPI Section Ch, Week 198933 Derwent Publications Ltd., London, GB; Class A25, AN 1989-237535 XP002184155 & JP 01 171912 A (HUMAN IND CORP), 6 July 1989 (1989-07-06)
- DATABASE WPI Section Ch, Week 197806 Derwent Publications Ltd., London, GB; Class H07, AN 1978-11293A XP002184156 & JP 52 155605 A (HITACHI CONSTRUCT MAC), 24 December 1977 (1977-12-24)
- PATENT ABSTRACTS OF JAPAN vol. 011, no. 238 (M-613), 5 August 1987 (1987-08-05) & JP 62 050254 A (NIPPON TOKUSHU TORYO KK), 4 March 1987 (1987-03-04)

## Description

### TECHNICAL FIELD

The present invention relates to a technique for preventing a creaking noise produced between a foamed urethane and a metallic surface when the foamed urethane touches on the metallic surface. In particular, the present invention relates to a noise inhibitor and a method for preventing a creaking noise produced between a foamed urethane and a metallic surface when an oil component sticks to the metallic surface and the foamed urethane touches on the metallic surface, and the metallic surface is treated using the noise inhibitor, and thereby, such a creaking noise production is inhibited.

### BACKGROUND OF THE ART

A foamed urethane material has an excellent property as a cushion material and is thus broadly used for a variety of applications. Such foamed urethane products or parts are used alone or together with metallic frames or plates of, for example, a seat or a bed.

However, as a property of a foamed urethane, the foamed urethane product or part is not smoothly moved on a metallic surface, and thus, a creaking noise is disadvantageously produced when the foamed urethane moves on a metallic surface.

When the foamed urethane is used as a cushion material for a seat of an automobile and the like or a mat of a bed, such a creaking noise disturbs its comfortable use. Thus, it is required to prevent or inhibit such a noise production.

In the art, in order to prevent such a noise production, a pad such as a non-woven cloth or a felt cloth is attached on a molded foamed urethane product or part so as not to directly touch the foamed urethane to the metallic surface.

A seat used for an automobile is often manufactured by foaming an urethane material in a mold, and a non-woven cloth is placed in a mold before the molding process so as to attach the non-woven cloth on the molded foamed urethane product or part by foaming and molding the foamable urethane material together with the non-woven cloth, in order to prevent the noise production described above.

The noise production can be prevented if such a non-woven cloth is attached on a foamed urethane. However, the number of the manufacturing process is disadvantageously increased, and the whole manufacturing cost is also increased.

The creaking noise produced between the foamed urethane and the metallic surface depends on the metallic surface condition. For example, the creaking noise is not produced very much if the metallic surface is coated with a coating material consisting of melamine alkyd and the like. However, as a recent tendency of an automobile manufacture, in order to reduce the manufacturing cost, it is abolished to use such a coating material for most of metallic frames excepting a particular metallic frame. Thus, the creaking noise production must be prevented by use of a pad such as a non-woven cloth and a felt cloth, and use of such a pad is disadvantageously very expensive as described above.

Meanwhile, the creaking noise production can be prevented by use of grease or Vaseline instead of use of a non-woven cloth or a felt cloth. Grease or Vaseline is applied to a touching area between the foamed urethane and the metallic surface. It seems that the creaking noise production can be prevented by use of grease because grease does not dry in a short time. However, the foamed urethane and the metallic surface are greasy for a long time, and not only its handling is difficult but also other parts and an installed assembling line are contaminated. Thus, it is substantially difficult to use grease or Vaseline in a manufacturing site.

Recently, "a noise-preventing agent (or a sliding agent)" coated on the foamed urethane is commercially available. However, it is very expensive and a large quantity of the noise-preventing agent must be coated on the foamed urethane in order to achieve a desired effect. In addition to this matter, as well as grease and Vaseline described above, this agent does not dry in a short time, and other parts and an installed assembling line are contaminated. If the agent is completely dried up to avoid this problem, the noise-preventing effect will not be expected. Thus, use of such a noise-preventing agent is limited.

EP-A-0600847 discloses cleaning compositions comprising a non-ionic surfactant system containing a mixture of highly hydrophilic and highly hydrophobic non-ionic surfactants, and further discloses a diluted cleaning composition obtained by diluting said compositions in water before being used to clean hard surfaces.

The present invention is made in order to solve those problems, and therefore, an object of the present invention is to provide a noise inhibitor and a method for preventing a creaking noise produced between a foamed urethane and a metallic surface when an oil component sticks to the metallic surface and the foamed urethane touches on the metallic surface.

Another object of the present invention is to provide a noise inhibitor and a method for preventing such a noise without reducing a rust preventing effect even though the oil component of a rust preventing oil sticks to the metallic surface.

Still another object of the present invention is to provide a noise inhibitor and a method capable of preventing such a noise production even though the treated surface is not only in a wet condition but also in a dry condition.

### SUMMARY OF THE INVENTION

The present invention provides a noise inhibitor according to claim 1.

In another aspect, the invention provides a method for treating a metallic surface, as claimed in claim 4.

If the surfactant mixture is diluted by 2 to 15 times, the resulting solution (i.e. the noise inhibitor) can be easily coated on a metallic surface and at least more than 10% of the surfactant as a solute dissolves in water or the water-solution.

If the range of pH of the noise inhibitor is from 7.5 to 9.5, the resulting noise inhibitor will be excellent in the stability, the coating ability (in particular, by use of spray), the workability and the rust preventing ability. If the range of pH is below 7.5 (i.e. acidity), the anticorrosion will be reduced. Meanwhile, if the range of pH is above 9.5 (i.e. alkalinity), the anticorrosion will be good but the solution stability becomes worse.

Note that the range of HLB (Hydrophile-Lipophile Balance) (the relative simultaneous attraction of an emulsifier for two phases of an emulsion system) of the surfactant mixture is from 8.0 to 10, desirably from 8.5 to 9.5.

If the range of HLB is above 10, the noise inhibitor exhibits a high hydrophilic property so as to "repel" it even though the noise inhibitor diluted with water is coated on a metallic surface, so that the evenly thin coated film layer is not formed over the metallic surface. In addition to this matter, the noise inhibitor coated does not dry in a short time, and this causes that not only the workability becomes worse but also the creaking noise preventing ability is reduced. Meanwhile, if the range of HLB is below 8, the noise inhibitor has a high lipophilic property, so that several properties such as the drying ability, the workability and the creaking noise preventing ability are good and the anticorrosion is improved, but the solution stability becomes worse and the solution is separated.

The noise inhibitor of the present invention can be coated on a metallic surface to which an oil component of a rust preventing oil and the like sticks, by applying a coating technique appropriately selected from means of spraying, brush-painting, role-coat and the like.

After coating, the oil component is emulsified or gelled and the viscosity thereof is almost vanished. Thus, the non-viscous coated film layer is stably and reliably formed over the metallic surface, and this layer is placed between the foamed urethane and the metallic surface, and thereby, the creaking noise production is prevented.

The noise inhibitor of the present invention has no toxicity to a human body and no stimulation to a skin.

### BEST MODE FOR CARRYING OUT THE INVENTION

In order to examine a mechanism of a creaking noise produced between a foamed urethane and a metallic surface (steel surface), a variety of tests were carried out. The result is as shown in table 1.
Table 1

**Table 1 (Foamed Urethane/Metallic Surface Noise Production Test)**

| Test surface | Test oil | Condition | | Noise production |
|---|---|---|---|---|
| Steel Plate SPCC (automobile) | Rust preventing oil^{*1} | Half Dry (viscous) | × × | (Large Noise) |
| | Operating oil Lubri cating oil | Wet (No Dry) | ○ | (Smooth/ No Creaking Noise) |
| | | Half Dry/Dry (viscous) | × × | (Large Noise) |
| | Engine Oil (automobile) | Wet (No Dry) | ○ | (Smooth/No Creaking Noise) |
| | | Half Dry/Dry (viscous) | × × | (Large Noise) |
| | Grease (automobile) | Wet (No Dry) | ○ | (Not Smooth/ No Creaki ng Noise) |
| | Silicon oil | Enough Coati ng | ○ | (Smooth/ No Creaking Noise) |
| | Degrease ^{*2} (Trichlene Cleaning) | No Contami nation | ○ | (Not Smooth/ No Creaki ng Noise) |
| | Printing ^{*3} (Meramine Alkyd) | No Contami nation | ○ | (Large Fri cti on/ No Creaking Noise) |
| | | Rust preventi ng oil Half Dry/Dry (viscous) | × | (Middle Creaking Noise) |

| | | | | |
|---|---|---|---|---|
| * 1 Steel plate purchased * 2 Degreasing the steel plate on which the rust preventing oil * 3 Conventi onal printing bl ack pai nt | | | | |

As seen in table 1:
1) a large creaking noise is produced if an oil component of a rust preventing oil or a lubricating oil sticks to a metallic surface;
2) there is no creaking noise if a metallic surface is completely cleaned by use of trichlene;
3) a creaking noise is not produced if a measure of rust is produced on a metallic surface; and
4) a creaking noise is not produced if a metallic surface is coated by printing melamine alkyd.

As a result of this test, the creaking noise is produced between a foamed urethane and a metallic surface when the foamed urethane is pushed and moved on the metallic surface if an oil component such as a rust preventing oil and oils and fats sticks to the metallic surface or the foamed urethane. If the metallic surface is completely degreased so as to observe no contamination of such an oil component and is then coated with silicon oil so as to slip or smoothly move, the creaking noise is not produced.

According to the above descriptions, the inventors of the present invention have found that it can be achieved to prevent the creaking noise production by eliminating the viscosity of an oil component such as a rust preventing oil and oils and fats which sticks to a metallic surface and by allowing to smoothly move a foamed urethane on the metallic surface. Also, it has been found that the viscosity of the oil component can be easily eliminated by treating directly the metallic surface rather than by treating the foamed urethane.

As a technique for eliminating the viscosity of the oil component, it is known to apply a surfactant so as to modify the oil component into a hydrophilic emulsion or gel by absorbing the oil component. Meanwhile, it has been found that when a metallic surface to which an oil component sticks is treated by use of a novel noise inhibitor of the present invention so as to modify the oil component into an emulsion or a gel, a foamed urethane is smoothly moved on the metallic surface.

In addition to this matter, as a result of modifying the oil component into a hydrophilic material, if a large quantity of hydrophilic radical is retained on the metallic surface, a desired ability of an oil component such as a rust preventing oil and a lubricating oil may be degraded. However, it has been found that a good workability is obtained and the effect is improved by retaining a least amount of lipophilic radical required to keep the ability.

In addition to this matter, it has been found that the above effect can be obtained even though the noise inhibitor of the present invention coated on a metallic surface is not only in a wet condition but also in a half dry condition.

### Examples

Examples of novel noise inhibitors of the present invention are shown in table 2. This table also shows other characteristics such as the separation of each solution, the wetting, the anticorrosion and the noise production when each solution is coated on a metallic surface with a rust preventing oil. Note that pH is adjusted so as to improve the rust preventing effect.

As shown in table 2, Experiments 1-4 show that the creaking noise preventing effect can be obtained, and Examples 1-5 show that the desirable effects related to the solution separation, the wetting and the anti corrosion are further obtained.
**Experiment** 1: A typical non-ionic water-soluble surfactant (A) (HLB=13.7) is diluted by 15 times with water. The range of pH of this solution is from 6 to 8. By use of this solution as a noise inhibitor, any creaking noise is not observed but both the wetting to a metallic surface and the anticorrosion are not good.
**Experiment 2:** An oil-soluble surfactant (B) (HLB=8.4) that increases a lipophilic radical is diluted by 10 times with water. In this experiment, as a result of using this solution as a noise inhibitor, any creaking noise is not observed and the wetting to a metallic surface is good. However, the anticorrosion is not enough and the separation is disadvantageously occurred in the solution diluted by 10 times. Thus, this solution is not applicable for a practical use.
**Experiment 3:** A lipohilic oil-soluble surfactant (B) is mixed to a hydrophilic water-soluble surfactant (C). The mixing rate of the surfactant (B) to (C) is 7.5:2.5. The mixture is diluted into 10 times with water so as to adjust its HLB to 10.1. This solution has pH=9.0. In this experiment, as a result of using this solution as a noise inhibitor, any creaking noise is not observed and both the solution separation and the wetting are improved. However, the anticorrosion is not enough.
**Experiment 4:** This experiment is substantially the same as Experiment 3, excepting that diluting by 8 times with a wax emulsion (B). Note that the wax emulsion (B) is diluted by 5 times with water. In this experiment, as a result of using this solution as a noise inhibitor, any creaking noise is not observed and both the solution separation and the wetting are improved. However, the anticorrosion is not good. This implies that a manner of wax treatment affects the rust preventing effect.
**Example 1:** This example is similar to Experiment 3 but the mixing rate of the water-soluble surfactant (C) is decreased. The mixture is diluted by 8 times with water so as to adjust its HLB to 9.5. This solution has pH=9.0. In this example, as a result of using this solution as a noise inhibitor, any creaking noise is not observed, and all of the solution separation, the wetting and the anticorrosion are good.
**Example 2:** This example is similar to Example 1 but the mixing rate of the water-soluble surfactant (C) is further decreased. The mixture is diluted by 10 times with water so as to adjust its HLB to 9.1. This solution has pH=9.0. In this example, as a result of using this solution as a noise inhibitor, all characteristics are good as well as Example 1.
**Example 3:** This example is similar to Example 2 but the mixing rate of the water-soluble surfactant (C) is further decreased. The mixture is diluted by 8 times with water so as to adjust its HLB to 8.7. This solution has pH=9.0. In this example, as a result of using this solution as a noise inhibitor, all characteristics are good as well as Examples 1 and 2.
**Example 4:** This example is similar to Example 3 but the mixing rate of the water-soluble surfactant (C) is further decreased. The mixture is diluted into 5 times with water so as to adjust HLB to 8.5. This solution has pH=9.0. In this example, as a result of using this solution as a noise inhibitor, all characteristics are good as well as Examples 1, 2 and 3.
**Example 5:** In this example, the mixing rate of the water-soluble surfactant is the same as that of Example 2, and the mixture is diluted by 10 times with a wax emulsion solution (A) diluted by 5 times with water. In this example, as a result of using this solution as a noise inhibitor, as well as other examples, all characteristics are good. Note that, in this example, the mixture has white color so that a coated area can be identified clearly. This matter is not found in any other examples. Also, in this example, the anticorrosion is advantageously expected to improve more than that of other examples.
Table 2

**Table 2 EXPERIMENTAL RESULTS OF SURFACTANT COMPOSITION/METAL WITH RUST PREVENTING OIL**

| | EXPERIMENT | | | | EXAMPLE | | | | |
|---|---|---|---|---|---|---|---|---|---|
| | 1 | 2 | 3 | 4 | 1 | 2 | 3 | 4 | 5 |
| SURFACTANT A | 10 | | | | | | | | |
| SURFACTANT B | | 10 | 7.5 | 7.5 | 8.3 | 9.0 | 9.5 | 9.8 | 9.0 |
| SURFACTANT C | | | 2.5 | 2.5 | 1.7 | 1.0 | 0.5 | 0.2 | 1.0 |
| IONICITY | Non-ion | Non-ion | Non-ion | Non-ion | Non-ion | Non-ion | Non-ion | Non-ion | Non- ion |
| HLB (solo) | 13.7 | 8.4 | 8.4 15.0 | 8.4 15.0 | 8.4 15.0 | 8.4 15.0 | 8.4 15.0 | 8.4 15.0 | 8.4 15.0 |
| MAIN COMPONENT * | A | B | B C | B C | B C | B C | B C | B C | B C |
| pH (solo) | 6- 8 | 5.5 - 8.5 | 5.5-8.5 7 | 5.5-8.5 7 | 5.5-8.5 7 | 5.5-8.5 7 | 5.5-8.5 7 | 5.5-8.5 7 | 5.5-8.5 7 |
| HLB (mixture) | 13.7 | 8.4 | 10.1 | 10.1 | 9.5 | 9.1 | 8.7 | 8.5 | 9.1 |
| WAX EMULSION A | — | — | — | — | — | — | — | — | 90 (diluted in 5 times) |
| WAX EMULSION B | — | — | -— | 70 (diluted in 5 times) | — | — | — | — | — |
| WATER | 90 | 90 | 90 | — | 70 | 90 | 70 | 40 | — |
| TOTAL AMOUNT | 150 | 100 | 100 | 80 | 80 | 100 | 80 | 50 | 100 |
| DILUTION (times) | 15 | 10 | 10 | 8 | 8 | 10 | 8 | 5 | 10 |
| pH (mixture) | 7.0 | 7.0 | 9.0 | 9.0 | 9.0 | 9.0 | 9.0 | 9.0 | 9.0 |
| SOLUTION (SEPARATION) | None | Separate | None | None | None | None | None | None | None |
| WETTING | No Good | Good | Good | Good | Good | Good | Good | Good | Good |
| ANTICORROSION | × × | Δ-○ | Δ | × | ○ | ⊚ | ⊚ | ⊚ | ⊚ |
| CREAKING NOISE | None | None | None | None | None | None | None | None | None |

| | | | | | | | | | |
|---|---|---|---|---|---|---|---|---|---|
| * A Polyethylene glycol mono- oleic acid type B Polyethylene glycol di-oleic acid C Polyoxyethylene sorbitane mono-oleic acid type | | | | | | | | | |

This table shows that several characteristics such as the creaking noise preventing ability, the rust preventing ability, the wetting and the solution separation are strongly correlated to HLB and pH values. That is, in order to obtain a desirable effect, it is important that the surfactant has HLB=8.0-10 and more than 10%, preferably more than 12.5% of solute.

By coating a noise inhibitor of the present invention on a metallic surface to which an oil component sticks, a non-viscous film layer is formed on the metallic surface, and this layer is placed between a foamed urethane and the metallic surface so that the creaking noise production is prevented.

In the art, the creaking noise has been prevented by use of a pad such as a non-woven cloth and the like or by coating an expensive noise-preventing agent. In the present invention, by use of the novel noise inhibitor, the creaking noise production is prevented more easily and more cheaply than the art.

According to the present invention, even though a rust preventing oil as an oil component sticks to a metallic surface, the wetting is good and a water component is removed for a relatively short time so as to handle it more easily. Also, the rust preventing effect is kept and the creaking noise production can be prevented even though the coated metallic surface is not only in a dry condition but also in a wet condition.

## Claims

1. A noise inhibitor for treating a metallic surface to prevent a creaking noise produced between a foamed urethane and said metallic surface when an oil component sticks to said metallic surface and said foamed urethane touches on said metallic surface, consisting of:
a non-ionic oil-soluble surfactant and a water-soluble surfactant, said surfactants being mixed; and
water, said mixture being diluted by 5 to 10 times with said water,
wherein the HLB of said oil-soluble surfactant is in the range from 8.0 to 10, the HLB of said water-soluble surfactant is in the range from 10 to 15, the HLB of the mixture of said oil-soluble surfactant and said water-soluble surfactant is from 8.0 to 10 and the range of pH of said noise inhibitor is from 7.5 to 9.5.

2. A noise inhibitor of claim 1, wherein the HLB of the mixture of said oil-soluble surfactant and said water-soluble surfactant is from 8.5 to 9.5.

3. A method for treating a metallic surface to prevent a creaking noise produced between a foamed urethane and said metallic surface when an oil component sticks to said metallic surface and said foamed urethane touches on said metallic surface, comprising the step of coating thinly the noise inhibitor of claim 1 on said metallic surface,
thereby, the oil component is emulsified or gelled so as not to exhibit the viscosity, and after drying, a non-viscous film layer is formed on said metallic surface.

## Patentansprüche

1. Geräuschhemmer zum Behandeln einer metallischen Oberfläche zum Verhindern eines Knarrgeräusches, das zwischen einem geschäumten Urethan und der metallischen Oberfläche produziert wird, wenn eine Ölkomponente an der metallischen Oberfläche haftet und das geschäumte Urethan die metallische Oberfläche berührt, bestehend aus:
einer nichtionischen öllöslichen oberflächenaktiven Substanz und einer wasserlöslichen oberflächenaktiven Substanz, wobei die oberflächenaktiven Substanzen gemischt sind; und
Wasser, wobei die Mischung 5 bis 10 Mal mit dem Wasser verdünnt ist,
wobei das hydrophile-lipophile Gleichgewicht der öllöslichen oberflächenaktiven Substanz im Bereich von 8,0 bis 10 ist, das hydrophile-lipophile Gleichgewicht der wasserlöslichen oberflächenaktiven Substanz im Bereich von 10 bis 15 ist, das hydrophile-lipophile Gleichgewicht der Mischung der öllöslichen oberflächenaktiven Substanz und der wasserlöslichen oberflächenaktiven Substanz 8,0 bis 10 beträgt und der pH-Bereich des Geräuschhemmers 7,5 bis 9,5 beträgt.

2. Geräuschhemmer nach Anspruch 1, wobei das hydrophile-lipophile Gleichgewicht der Mischung der öllöslichen oberflächenaktiven Substanz und der wasserlöslichen oberflächenaktiven Substanz 8,5 bis 9,5 beträgt.

3. Verfahren zum Behandeln einer metallischen Oberfläche zum Verhindern eines Knarrgeräusches, das zwischen einem geschäumten Urethan und der metallischen Oberfläche produziert wird, wenn eine Ölkomponente an der metallischen Oberfläche haftet und das geschäumte Urethan die metallische Oberfläche berührt, den Schritt umfassend, den Geräuschhemmer nach Anspruch 1 dünn auf die metallische Oberfläche aufzutragen,
wodurch die Ölkomponente emulgiert oder geliert, um die Viskosität nicht aufzuzeigen, und nach dem Trocknen eine nicht viskose Filmschicht auf der metallischen Oberfläche gebildet wird.

## Revendications

1. Inhibiteur de bruit destiné à traiter une surface métallique en vue d'empêcher la production d'un bruit de grincement entre un uréthane aéré et ladite surface métallique quand un composant huileux colle à ladite surface métallique et ledit uréthane aéré touche ladite surface métallique, consistant en :
un agent de surface soluble dans l'huile non ionique et un agent de surface soluble dans l'eau, lesdits agents de surface étant mélangés ; et
eau, ledit mélange étant dilué 5 à 10 fois avec ladite eau,
dans lequel la HLB (balance hydrophile-lipophile) dudit agent de surface soluble dans l'huile est comprise dans la plage de 8,0 à 10, la HLB dudit agent de surface soluble dans l'eau est comprise dans la plage de 10 à 15, la HLB du mélange dudit agent de surface soluble dans l'huile et dudit agent de surface soluble dans l'eau s'étend de 8,0 à 10 et la plage du pH dudit inhibiteur de bruit s'étend de 7,5 à 9,5.

2. Inhibiteur de bruit selon la revendication 1, dans lequel la HLB du mélange dudit agent de surface soluble dans l'huile et dudit agent de surface soluble dans l'eau s'étend de 8,5 à 9,5.

3. Procédé de traitement d'une surface métallique en vue d'empêcher la production d'un bruit de grincement entre un uréthane aéré et ladite surface métallique quand un composant huileux colle à ladite surface métallique et ledit uréthane aéré touche ladite surface métallique, comprenant l'étape de revêtement en couche mince de l'inhibiteur de bruit selon la revendication 1 sur ladite surface métallique,
selon lequel le composant huileux est émulsifié ou gélifié de manière à ne pas présenter de viscosité, et après séchage, une couche pelliculaire non visqueuse est formée sur ladite surface métallique.
